(19) Europäisches Patentamt / European Patent Office / Office européen des brevets

(11) **EP 3 735 551 B1**

(12) **EUROPEAN PATENT SPECIFICATION**

(45) Date of publication and mention
of the grant of the patent:
**12.02.2025 Bulletin 2025/07**

(21) Application number: **18898698.8**

(22) Date of filing: **03.01.2018**

(51) International Patent Classification (IPC):
**F17D 5/06** *(2006.01)*     **E21B 47/00** *(2012.01)*

(52) Cooperative Patent Classification (CPC):
**F17D 5/00; E21B 47/006; F17D 5/06;**
E21B 2200/20

(86) International application number:
**PCT/US2018/012153**

(87) International publication number:
**WO 2019/135737 (11.07.2019 Gazette 2019/28)**

(54) **METHOD, CORRESPONDING SOFTWARE STORAGE MEDIUM AND SYSTEM FOR NON-INTRUSIVELY DETERMINING DEPOSITS IN A FLUIDIC CHANNEL**

VERFAHREN, SPEICHERMEDIUM ZUR SPEICHERUNG DER ENTSPRECHENDEN SOFTWARE UND SYSTEM ZUR ZERSTÖRUNGSFREIEN BESTIMMUNG VON ABLAGERUNGEN IN EINEM FLUIDKANAL

PROCÉDÉ, DISPOSITIF DE STOCKAGE DE LOGICIEL ASSOCIÉ ET SYSTÈME DE DÉTERMINATION NON INTRUSIVE DE DÉPÔTS DANS UN CANAL FLUIDIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.11.2020 Bulletin 2020/46**

(73) Proprietor: **HALLIBURTON ENERGY SERVICES, INC.**
**Houston, TX 77032 (US)**

(72) Inventor: **JAGANNATHAN, Srinivasan**
**Houston, TX 77041 (US)**

(74) Representative: **Hoffmann Eitle**
**Patent- und Rechtsanwälte PartmbB**
**Arabellastraße 30**
**81925 München (DE)**

(56) References cited:
WO-A1-2010/087724        WO-A1-2017/008098
US-A- 4 521 864          US-A1- 2003 185 100
US-A1- 2003 185 100      US-A1- 2012 041 694
US-A1- 2015 378 052      US-A1- 2016 199 888
US-A1- 2017 350 836

• **DUAN H F ET AL: "Experimental Investigation of Wave Scattering Effect of Pipe Blockages on Transient Analysis", PROCEDIA ENGINEERING, ELSEVIER BV, NL, vol. 89, 17 December 2014 (2014-12-17), pages 1314 - 1320, XP029117473, ISSN: 1877-7058, DOI: 10.1016/ J.PROENG.2014.11.445**

**Description**

FIELD

The present disclosure relates generally to modeling deposits in a fluidic channel. In particular, the present disclosure relates to inverse models for deposit estimation in a fluidic channel.

BACKGROUND

Wellbores are drilled into the earth for a variety of purposes including tapping into hydrocarbon bearing formations to extract the hydrocarbons for use as fuel, lubricants, chemical production, and other purposes. These hydrocarbons are often transmitted to processing plants via pipelines. Fluidic channels such as pipelines and wellbores need to be inspected to determine issues such as leaks, blockages by deposits, or structural erosion or damage.

Most methods for monitoring the integrity of fluidic channels are intrusive, such as using pigs, overhead drones, low flying airplanes, and the like. These methods can entail considerable investments in money and time.

WO 2017/008098 A1 discloses a method and system for assessing the condition of a pipeline in a pipeline system. The method includes generating a pressure wave in the fluid being carried along the pipeline system at a pressure wave generating location along the pipeline system and detecting pressure wave interaction signals at two closely spaced measurement locations along the pipeline. The method then includes determining a system response function for the pipeline based on the detected pressure wave interaction signals for each measurement location and characterising the pipeline based on the system response function.

US 2012/0041694 A1 discloses a method and system for assessing the condition of a pipe carrying a fluid. The method includes the steps of generating a pressure wave in the fluid being carried along the pipe and detecting a pressure wave interaction signal resulting from an interaction of the pressure wave with a localized variation in pipe condition. The method then involves deter- mining from the timing of the pressure wave interaction signal the location of the localised variation in pipe condition and the extent of the localised variation in pipe condition based on a characteristic of the pressure wave interaction signal.

US 2015/0378052 A1 discloses methods and systems to estimate physical dimensions of actual obstructions identified as being in a wellbore of an injection well are provided. Methods and systems include the determination of a well performance model with a simulated obstruction, using inflow performance and outflow performance relationships.

Duan et al. ("Experimental Investigation of Wave Scattering Effect of Pipe Blockages on Transient Analysis") investigates experimentally the wave scattering effect of rough blockages in the pipeline and its impacts on the transient analysis for pipe systems. Two experimental configurations of rough blockages (hard gravels and fibrous materials) are considered to examine the wave scattering effect on transient wave propagation. The results obtained are used to validate and verify the findings of previous numerical and analytical studies. The results of this study provide fundamental understanding and profound implications to practical applications such as transient-based pipe system design and pipe blockage detection.

US 2003/0185100 A1 discloses tube waves used to locate and characterize a solids deposit inside a fluid-filled pipe. An acoustic tube wave pulse is transmitted along the pipe. On encountering a solids deposit, the tube wave pulse is perturbed and partially reflected by changes in the boundary conditions between the fluid and the pipe to produce two deposit-modified acoustic waves. One is a perturbed wave travelling in the same direction as the tube wave pulse. The other is a reflected wave travelling in the opposite direction. One of these deposit-modified acoustic waves is received to produce an acoustic signal. Accumulated acoustic signals are processed by Fast-Fourier Transform to produce frequency-based digital data. Phase data from the frequency-based digital data is inverted to produce slowness spectrum data. Power data from the frequency-based digital data is inverted to produce attenuation spectrum data. Spectrum data is used to locate a solids deposit in the pipe. Inversion model processing of the spectrum data is used to estimate solids deposit thickness and type.

US 2017 0350936 A1 discloses a system and method for monitoring a characteristic of an environment of an electronic device. The electronic device may include a printed circuit board and a component. A sensor is placed on the printed circuit board, and may be between the component and the board, and connects to a monitor, or detector. An end user device may be used to store, assess, display and understand the data received from the sensor through the monitor.

BRIEF DESCRIPTION OF THE DRAWINGS

Implementations of the present technology will now be described, by way of example only, with reference to the attached figures, wherein:

FIG. 1 is a schematic diagram of an exemplary environment for a system for modeling deposits in a fluidic channel according to the present disclosure;
FIG. 2 is a flow chart of a method for generating a model of deposits;
FIG. 3 is an exemplary diagram of a measured pressure profile;
FIG. 4 is an exemplary diagram of a baseline simulation of a pressure profile;
FIG. 5 is a flow chart of a method for outputting a forward model of deposits; and
FIG. 6 is an exemplary diagram of a model of deposits in a fluidic channel.

DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the examples described herein. However, it will be understood by those of ordinary skill in the art that the examples described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

Disclosed herein are systems and methods for non-intrusively determining deposits in a fluidic channel. A measured pressure profile is obtained using pressure pulse technology which is then used to iteratively improve an estimation of deposit of a fluid channel. When the error between the measured pressure profile and the modeled deposit is within a curtained predefined threshold, a final deposit is output as a function of range to show location of deposits within the fluidic channel.

In order to obtain a measured pressure profile, pressure pulses are induced in the fluidic channel. One or more sensors measure a pressure profile based on the pressure pulses reflecting off of obstructions in the fluidic channel. The measured pressure profile may be then forwarded to a data acquisition system, or a processing unit.

The data acquisition system also generates a forward model of deposits in the fluidic channel. The forward model is generated using an initial estimate of the deposits at desired grid points and data regarding the pressure pulses. Based on the forward model, a simulated pressure profile is generated. An error is calculated using the measured pressure profile and the simulated pressure profile. If the error is not within a predetermined threshold, or in other words, when the error is too high or outside of the predetermined threshold, then the inputs to the forward model are updated. The updated forward model is adjusted based on the error. With the updated forward model, another simulated pressure profile is generated, and the error is calculated. If the error is once again outside of the predetermined threshold, then updating the forward model and subsequent steps are repeated until the error is within the predetermined threshold. If the error is within the predetermined threshold, then the forward model is output, and a model of deposits in the fluidic channel is generated. Since the inputs to the forward model are updated based on the error, this method may reduce the time for processing loads and enables processing completion, for instance, by a factor of greater than 100. The resolution of such an inversion scheme can also be much higher. For example, instead of the resolution being in terms of kilometers, the resolution utilizing the method can provide resolution in terms of meters.

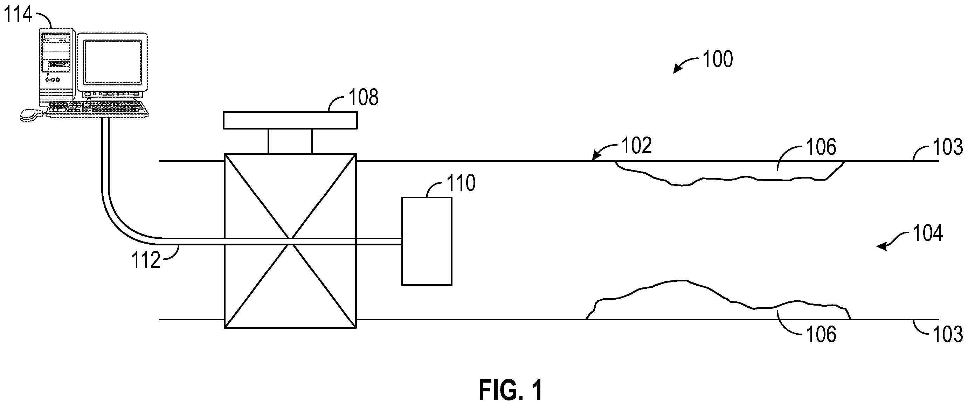

The method can be employed in an exemplary system 100 shown, for example, in FIG. 1. FIG. 1 illustrates a schematic diagram of a fluidic channel 102. The fluidic channel 102 illustrated in FIG. 1 is a pipeline. In other examples, the fluidic channel 102 can be, for example, a pipeline, a wellbore, a drill string, or any channel through which fluid flows. The portion of the fluidic channel 102 may have any orientation or extend only in one direction or multiple directions, for example vertical or at an angle, along any axis, and may be but is not required to be horizontal as schematically depicted in FIG. 1. The fluidic channel 102 has walls 103 which form an annulus 104 through which fluid can be contained in and flow. The fluid can be one fluid or more than one fluid. The fluid can include, for example, water or oil. The fluid can also substantially fill the entire fluidic channel 102. In other examples, the fluid can partially fill the fluidic channel 102. The walls 103 of the fluidic channel 102 can form a cross-sectional shape such as substantially circular, ovoid, rectangular, or any other suitable shape. The walls 103 of the fluidic channel 102 can be made of any combination of plastics or metals, suitable to withstand fluid flow without corrosion and with minimal deformation.

Within the fluidic channel 102, for example along the walls 103, deposits 106 may form. The deposits 106 can extend into the annulus 104 of the fluidic channel 102 any amount and in any shape and form to impede flow of the fluid. For example, in some areas, the deposits 106 may completely block the annulus 104 of the fluidic channel 102. In some areas, the walls 103 of the fluidic channel 102 do not have any deposits 106 formed thereon. In yet other areas, the deposits 106 only partly block the annulus 104. The deposits 106 can be, for example, wax deposits, clay deposits, or any other possible deposits that can adhere to the walls 103 of the fluidic channel 102 such that the fluid flow is at least partly impeded.

To obtain the measured profile, and inspect the fluidic channel 102 in a nonintrusive manner, at least one pressure pulse, such as a water-hammer pulse, can be induced. To induce the pressure pulses, a device 108 can be used. The device 108 can create a pressure pulse that travels through the fluidic channel 102 at the local speed of sound in the medium. An example of a device 108 is used in the PressurePulse™ Service by Halliburton Energy Services, Inc. The device 108 is not a permanent fixture or attachment. As such, the device 108 can be disposed in the fluidic channel 102 or coupled with the fluidic channel 102 only when needed to create pressure pulses. In other examples, the device 108 can be a permanent fixture in the fluidic channel 102. The device 108 can be, for example, a valve. The device 108 can create the pressure pulse by opening and closing the valve. When the valve is shut, a pressure pulse is generated that travels upstream of the valve. The device 108 can be electrically programmed, such that different pressures can be induced based on the open and close sequences. The quicker the valve is opened and closed, the greater, or sharper, the pressure pulse.

As the pressure pulse travels along the fluidic channel 102, any encountered obstructions or deposits 106 generate a reflected signal which is received back at the device 108. The system 100 includes a sensor 110 to receive the reflected pressure pulse signals. The sensor 110 can be a known distance from the device 108. The sensor 110 can be a pressure transducer. In other examples, the sensor 110 can be any suitable sensor that measures pressure or stress of the fluid, for example a string gauge or an optical fiber transducer. The reflected signals are then passed through a transmission system 112 to a data acquisition system 114 to be interpreted to map out and quantify any deposits 106 in the fluidic channel 102. The data acquisition system 114 can be at the surface, within a vehicle such as a submarine, or any other suitable location such that the data can be interpreted by an operator. The data acquisition system 114 can include a non-transitory computer readable storage medium. The non-transitory computer readable storage medium includes at least one processor and stores instructions executable by the at least one processor. The transmission system 112 can be wireline, optical fiber, wirelessly such as through the cloud or Bluetooth, or any other suitable method to transmit data.

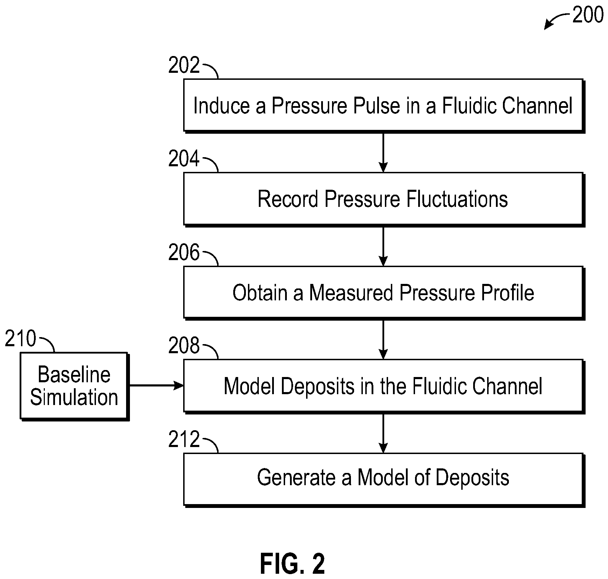

Referring to FIG. 2, a flowchart is presented in accordance with an example embodiment. The method 200 is provided by way of example, as there are a variety of ways to carry out the method. The method 200 described below can be carried out using the configurations illustrated in FIG. 1, for example, and various elements of these figures are referenced in explaining example method 200. Each block shown in FIG. 2 represents one or more processes, methods or subroutines, carried out in the example method 200. Furthermore, the illustrated order of blocks is illustrative only and the order of the blocks can change according to the present disclosure. Additional blocks may be added or fewer blocks may be utilized, without departing from this disclosure. The example method 200 can begin at block 202.

At block 202, a pressure pulse is induced in a fluidic channel as described above. One or more pressure pulses can be induced. For example, a sequence of pressure pulses of differing sharpness can be induced. In other examples, the pressure pulses may all have the same sharpness. In yet other examples, only one pressure pulse is induced. The pressure pulse is induced by a device which can be a valve. By opening and closing the valve, a pressure pulse is induced. The faster the valve is closed, the sharper the pressure pulse. The pressure pulse travels upstream in the fluidic channel and reflects off of any obstructions such as deposits in the fluidic channel.

At block 204, the pressure fluctuations are then recorded by one or more sensors. The data is then transmitted to a data acquisition system to interpret the data.

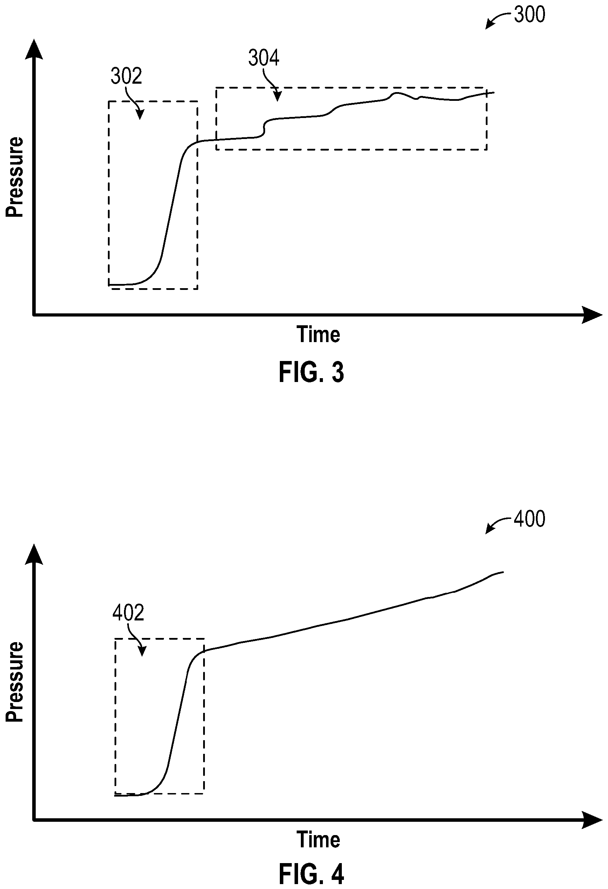

At block 206, a measured pressure profile is obtained. The measured pressure profile, as shown in FIG. 3, is provided as a diagram 300 of pressure versus time. Section 302 of the diagram 300 illustrates the pressure spike created by the opening and closing of the valve. The quicker the valve is closed, the sharper the pressure spike. Section 304 of the diagram 300 illustrates pressure fluctuations which correspond to obstructions such as deposits in the fluidic channel.

Referring back to FIG. 2, at block 208, the deposits in the fluidic channel are modeled. The modeling can be performed by a data acquisition system which includes a non-transitory computer readable storage medium. The non-transitory computer readable storage medium includes at least one processor and stores instructions executable by the at least one processor. To model the deposits, a baseline simulation, at block 210, is used. The baseline simulation is a simulation of the fluidic channel if there are no deposits. The baseline simulation can be calculated using hydrodynamic equations by knowing information about the fluidic channel such as the fluid, the diameter and shape, the pressure pulse that would be created by the device, among other known data. From the baseline simulation, a simulated pressure profile, as illustrated in FIG. 4, can be created. As shown in FIG. 4, similar to the measured pressure profile in FIG. 3, a simulated pressure profile is provided as a diagram 400 of pressure versus time. Section 402 of the diagram 400 illustrates the pressure spike created by the opening and closing of the valve. However, different than the measured pressure profile of FIG. 3, there are no fluctuations in the pressure, as the simulated pressure profile is based on the baseline simulation which assumes that there are no deposits in the fluidic channel. If there are known deposits or obstructions which would cause fluctuations in the fluidic channel, those may be shown in the simulated pressure profile.

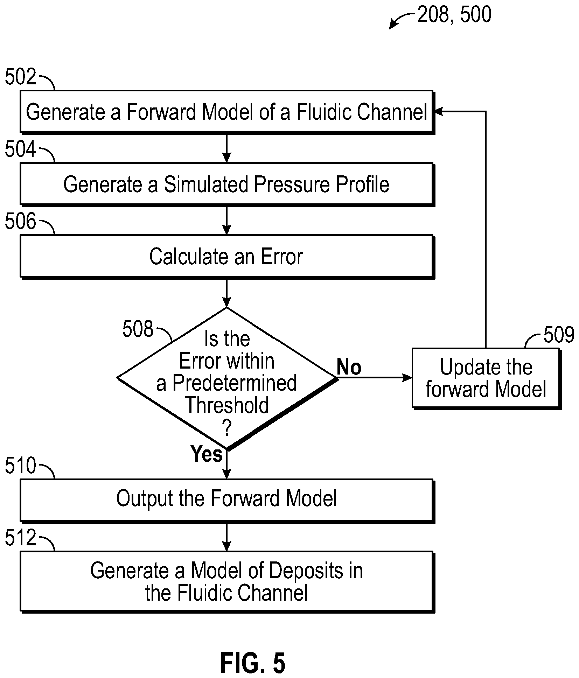

The model of the deposits is then created by comparing the simulated pressure profile with the measured pressure profile and adjusting the simulated pressure profile until the simulated pressure profile and the measured pressure profile substantially match. To substantially match, the error between the simulated pressure profile and the measured pressure profile must fall within a predetermined threshold. Modeling the deposits will be described in further detail in FIG. 5 below.

Referring back to FIG. 2, at block 212, if the simulated pressure profile and the measured pressure profile are substantially matching, a model of deposits in the fluidic channel is generated.

Referring to FIG. 5, a flowchart is presented in accordance with an example embodiment. The method 500 is provided by way of example, as there are a variety of ways to carry out the method. The method 500 described below can be carried out using the configurations illustrated in FIGS. 1-4, for example, and various elements of these figures are referenced in explaining example method 500. Each block shown in FIG. 5 represents one or more processes, methods or subroutines, carried out in the example method 500. Furthermore, the illustrated order of blocks is illustrative only and the order of the blocks can change according to the present disclosure. Additional blocks may be added or fewer blocks may be utilized, without departing from this disclosure. The example method 500 can be implemented using data acquisition system which includes a non-transitory computer readable storage medium. The non-transitory computer readable storage medium includes at least one processor and stores instructions executable by the at least one processor to implement the example method 500. The example method 500 can begin at block 502.

At block 502, a forward model of a fluidic channel is generated. The forward model is generated using water-hammer equations. The forward model is based on the baseline simulation. The forward model incorporates an initial guess at deposits, or estimated deposits, at desired grid points. The grid points may be 1 meter, 10 meters, 20 meters, 100 meters, or any desired resolution. The initial guess at deposits includes, for example, any known deposits. The known deposits may be known because of previous experience or known obstructions in the fluidic channel. The initial guess at deposits can also be set at 0, which provides that no deposits are known.

The forward model also incorporates a valve closing profile. The valve closing profile includes how the device created a pressure pulse, for example, how fast the valve was closed and/or the sequences of opening and closing the valve. As such, the valve closing profile includes the known information of the pressure pulses and known reflections that would occur from any known deposits or obstructions in the fluidic channel.

At block 504, a simulated pressure profile is generated from the forward model. The simulated pressure profile is a diagram of pressure versus time and reflects the initial pressure spike from the device creating the pressure pulse and pressure fluctuations from the pressure pulse reflecting off of estimated obstructions in the fluidic channels such as deposits.

At block 506, an error is calculated. The error indicates an amount that the simulated pressure profile does not correspond to the measured pressure profile. To calculate the error, the measured pressure profile from the at least one sensor is utilized. The error is calculated based on the difference between the measured pressure profile and the simulated pressure profile. The error can be calculated using the equation:

$$\text{Error} = \mid \text{measured pressure profile} - \text{simulated pressure profile} \mid^2.$$

At block 508, the error is compared with a predetermined threshold.

If the error is not within the predetermined threshold, the forward model is updated at block 509. The updated inputs (for example the deposit as a function of range) to the forward model can be calculated using the equation:

$$\text{Updated deposit} = \text{current deposit} + \alpha * \text{sqrt(error)}.$$

As such, the forward model is adjusted based on the error. The adjustable factor $\alpha$ has a sign which is the same as the sign of the difference between the measured pressure profile and the simulated pressure profile. The value of the adjustable factor $\alpha$ is empirically tested. For example, the first iteration of the adjustable factor $\alpha$ may be the largest number that is not numerically unstable. The value of the adjustable factor $\alpha$ can be dynamically adjusted depending on the magnitude of the error to ensure a slower rate of convergence when the simulated pressure profile is close to the measured pressure profile, or when the error begins to grow rather than reduce with the number of iterations. The steps of generating a forward model 502, generating a simulated pressure profile 504, calculating an error 506, determining whether the error is within, or less than, a predetermined error 508, and updating the forward model 509 are repeated until the error is within the predetermined threshold.

For example, the first iteration of the adjustable factor $\alpha$ can be 100. If the error is not within the predetermined threshold, then in the next iteration, the adjustable factor $\alpha$ may be set at 25. If, once again, the error is not within the predetermined threshold, in the following iteration, the adjustable factor $\alpha$ may be set at 22. In each iteration, the adjustable factor $\alpha$ is changed to be a higher or a lower value based on the change of the error until the error is less than the predetermined threshold.

By basing the adjustments to the forward model on the error, the processing time can be reduced, for example, from 2 to 4 hours to 2 to 5 minutes on average.

If the error is within the predetermined threshold, then at block 510, the forward model is outputted.

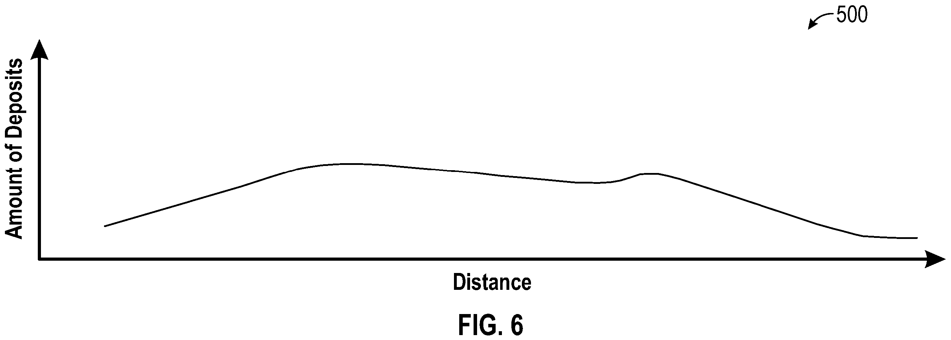

At block 512, a model of deposits in the fluidic channel is then generated and outputted. FIG. 6 illustrates an exemplary diagram 500 of a model of deposits in the fluidic channel. The exemplary diagram 500 provides for amount of deposits versus distance from the device and/or sensor. As illustrated in FIG. 6, the model of deposits in the fluidic channel provides for a visualization of the amount of obstruction that the deposit creates at each point of the fluidic channel.

After the model of deposits is generated and outputted, adjustments to the pipeline can be made. For example, the pipeline can be inspected at certain points with greater deposits. The pipeline can also be cleaned, for example by sending a chemical to dissolve or degrade the deposits. In other examples, the pipeline can be manually cleaned, or a tool such as a pig can travel through the pipeline to clean the deposits.

**Claims**

1. A method for non-intrusively determining deposits (106) in a fluidic channel (102), the method comprising:

   obtaining, from one or more sensors (110), a measured pressure profile based on at least one pressure pulse induced in a fluidic channel;
   generating (502) a forward model of deposits in the fluidic channel;
   generating (504), using the forward model, a simulated pressure profile;
   calculating (506), using the measured pressure profile and the simulated pressure profile, an error;
   updating (509), when the error is outside a predetermined threshold, the forward model including updated inputs calculated using updated deposit = the deposit + $\alpha$ * sqrt(the error), wherein $\alpha$ is an adjustable factor, the value of which is empirically tested;
   repeating, until the error is within the predetermined threshold, the steps of generating the forward model, generating the simulated pressure profile, calculating the error and updating the forward model;
   adjusting the updated forward model based on the error;
   outputting (510), when the error is within the predetermined threshold, the forward model;
   generating (512), using the forward model, an estimate of deposits in the fluidic channel; and
   outputting the estimate of deposits in the fluidic channel.

2. The method of claim 1, wherein the estimate of deposits is provided as a function of amount of estimated deposits in the fluidic channel versus distance in the fluidic channel from the one or more sensors.

3. The method of claim 1 or claim 2, wherein $\alpha$ is such that a first iteration of a is the largest number that is not numerically unstable.

4. The method of any preceding claim, wherein $\alpha$ is dynamically adjusted depending on the magnitude of the error.

5. **The method** of claim 4, wherein the adjusting of $\alpha$ ensures a slower rate of convergence when the simulated pressure profile is close to the measured pressure profile.

6. The method of claim 4, wherein the adjusting of $\alpha$ takes place when the error begins to grow with the number of repeats.

7. The method of claim 1, wherein the error =| the measured pressure profile - the simulated pressure profile $|^2$.

8. The method of claim 1, wherein $\alpha$ has a sign which is the same as the sign of the difference between the measured pressure profile and the simulated pressure profile.

9. A non-transitory computer readable storage medium storing instructions executable by at least one processor (114) to:

   obtain, from the one or more sensors (110), a measured pressure profile based on at least one pressure pulse induced in a fluidic channel;
   generate (502) a forward model of deposits in the fluidic channel;
   generate (504), using the forward model, a simulated pressure profile;
   calculate (506), using the measured pressure profile and the simulated pressure profile, an error;
   update (509), when the error is outside a predetermined threshold, the forward model including to update inputs calculated using updated deposit = the deposit + $\alpha$ * sqrt(the error), where $\alpha$ is an adjustable factor, the value of which is empirically tested;
   repeat, until the error is within the predetermined threshold, the generating of the forward model, the generating of the simulated pressure profile, the calculating of the error and the updating of the forward model;
adjust the updated forward model based on the error;
output (510), when the error is within the predetermined threshold, the forward model;
generate (512), using the forward model, an estimate of deposits in the fluidic channel; and
output the estimate of deposits in the fluidic channel

10. The non-transitory computer readable storage medium of claim 9, wherein the estimate of deposits is provided as a function of amount of estimated deposits in the fluidic channel versus distance in the fluidic channel from the one or more sensors.

11. The non-transitory computer readable storage medium of claim 9 or claim 10, wherein $\alpha$ is such that a first iteration of $\alpha$ is the largest number that is not numerically unstable.

12. The non-transitory computer readable storage medium of any of claims 9 to 11, wherein $\alpha$ is dynamically adjusted depending on the magnitude of the error.

13. The non-transitory computer readable storage medium of claim 12, wherein the adjusting of $\alpha$ ensures a slower rate of convergence when the simulated pressure profile is close to the measured pressure profile.

14. The non-transitory computer readable storage medium of claim 9 or claim 10, wherein $\alpha$ has a sign which is the same as the sign of the difference between the measured pressure profile and the simulated pressure profile.

15. A system for non-intrusively determining deposits (106) in a fluidic channel (102), the system comprising:

a fluidic channel;
a device (108) operable to induce at least one pressure pulse in the fluidic channel;
one or more sensors (110) operable to measure a pressure profile based on the at least one pressure pulse; and
a non-transitory computer readable storage medium according to any one of claims 9 to 14.

**Patentansprüche**

1. Verfahren zur nicht-intrusiven Bestimmung von Ablagerungen (106) in einem Fluidkanal (102), wobei das Verfahren Folgendes umfasst:

Erhalten, von einem oder mehreren Sensoren (110), eines gemessenen Druckprofils basierend auf mindestens einem Druckimpuls, der in einem Fluidkanal induziert wird;
Erzeugen (502) eines Vorwärtsmodells von Ablagerungen in dem Fluidkanal;
Erzeugen (504), unter Verwendung des Vorwärtsmodells, eines simulierten Druckprofils;
Berechnen (506), unter Verwendung des gemessenen Druckprofils und des simulierten Druckprofils, eines Fehlers;
Aktualisieren (509), wenn der Fehler außerhalb eines vorbestimmten Schwellenwerts liegt, des Vorwärtsmodells einschließlich aktualisierter Eingaben, die unter Verwendung der aktualisierten Ablagerung = die Ablagerung + $\alpha$ * Wurzel (der Fehler) berechnet werden, wobei $\alpha$ ein anpassbarer Faktor ist, dessen Wert empirisch getestet wird;
Wiederholen, bis der Fehler innerhalb des vorbestimmten Schwellenwerts liegt, der Schritte des Erzeugens des Vorwärtsmodells, des Erzeugens des simulierten Druckprofils, des Berechnens des Fehlers und des Aktualisierens des Vorwärtsmodells;
Anpassen des aktualisierten Vorwärtsmodells basierend auf dem Fehler;
Ausgeben (510), wenn der Fehler innerhalb des vorbestimmten Schwellenwerts liegt, des Vorwärtsmodells;
Erzeugen (512), unter Verwendung des Vorwärtsmodells, einer Schätzung von Ablagerungen in dem Fluidkanal; und
Ausgeben der Schätzung von Ablagerungen in dem Fluidkanal.

2. Verfahren nach Anspruch 1, wobei die Schätzung der Ablagerungen als Funktion der Menge der geschätzten Ablagerungen in dem Fluidkanal in Abhängigkeit von dem Abstand in dem Fluidkanal von dem einen oder den mehreren Sensoren bereitgestellt wird.

3. Verfahren nach Anspruch 1 oder 2, wobei α so gewählt ist, dass eine erste Iteration von α die größte Zahl ist, die nicht numerisch instabil ist.

4. Verfahren nach irgendeinem der vorhergehenden Ansprüche, wobei α in Abhängigkeit von der Größe des Fehlers dynamisch angepasst wird.

5. Verfahren nach Anspruch 4, wobei das Anpassen von α eine langsamere Konvergenzrate gewährleistet, wenn das simulierte Druckprofil nahe dem gemessenen Druckprofil liegt.

6. Verfahren nach Anspruch 4, wobei das Anpassen von α erfolgt, wenn der Fehler mit der Anzahl der Wiederholungen zu wachsen beginnt.

7. Verfahren nach Anspruch 1, wobei der Fehler = | das gemessene Druckprofil - das simulierte Druckprofil |$^2$ ist.

8. Verfahren nach Anspruch 1, wobei α ein Vorzeichen hat, das gleich dem Vorzeichen der Differenz zwischen dem gemessenen Druckprofil und dem simulierten Druckprofil ist.

9. Nichtflüchtiges computerlesbares Speichermedium, das Anweisungen speichert, die von mindestens einem Prozessor (114) ausführbar sind zum:

   Erhalten, von einem oder mehreren Sensoren (110), eines gemessenen Druckprofils basierend auf mindestens einem Druckimpuls, der in einem Fluidkanal induziert wird;
   Erzeugen (502) eines Vorwärtsmodells von Ablagerungen in dem Fluidkanal;
   Erzeugen (504), unter Verwendung des Vorwärtsmodells, eines simulierten Druckprofils;
   Berechnen (506), unter Verwendung des gemessenen Druckprofils und des simulierten Druckprofils, eines Fehlers;
   Aktualisieren (509), wenn der Fehler außerhalb eines vorbestimmten Schwellenwerts liegt, des Vorwärtsmodells einschließlich aktualisierter Eingaben, die unter Verwendung der aktualisierten Ablagerung = die Ablagerung + α * Wurzel (der Fehler) berechnet werden, wobei α ein anpassbarer Faktor ist, dessen Wert empirisch getestet wird;
   Wiederholen, bis der Fehler innerhalb des vorbestimmten Schwellenwerts liegt, des Erzeugens des Vorwärtsmodells, des Erzeugens des simulierten Druckprofils, des Berechnens des Fehlers und des Aktualisierens des Vorwärtsmodells;
   Anpassen des aktualisierten Vorwärtsmodells basierend auf dem Fehler;
   Ausgeben (510), wenn der Fehler innerhalb des vorbestimmten Schwellenwerts liegt, des Vorwärtsmodells;
   Erzeugen (512), unter Verwendung des Vorwärtsmodells, einer Schätzung von Ablagerungen in dem Fluidkanal; und
   Ausgeben der Schätzung von Ablagerungen in dem Fluidkanal.

10. Nichtflüchtiges computerlesbares Speichermedium nach Anspruch 9, wobei die Schätzung der Ablagerungen als Funktion der Menge der geschätzten Ablagerungen in dem Fluidkanal in Abhängigkeit von dem Abstand in dem Fluidkanal von dem einen oder den mehreren Sensoren bereitgestellt wird.

11. Nichtflüchtiges computerlesbares Speichermedium nach Anspruch 9 oder Anspruch 10, wobei α so gewählt ist, dass eine erste Iteration von α die größte Zahl ist, die nicht numerisch instabil ist.

12. Nichtflüchtiges computerlesbares Speichermedium nach irgendeinem der Ansprüche 9 bis 11, wobei α in Abhängigkeit von der Größe des Fehlers dynamisch angepasst wird.

13. Nichtflüchtiges computerlesbares Speichermedium nach Anspruch 12, wobei das Anpassen von α eine langsamere Konvergenzrate gewährleistet, wenn das simulierte Druckprofil nahe dem gemessenen Druckprofil liegt.

14. Nichtflüchtiges computerlesbares Speichermedium nach Anspruch 9 oder Anspruch 10, wobei α ein Vorzeichen hat, das gleich dem Vorzeichen der Differenz zwischen dem gemessenen Druckprofil und dem simulierten Druckprofil ist.

15. System zur nicht-intrusiven Bestimmung von Ablagerungen (106) in einem Fluidkanal (102), wobei das System Folgendes umfasst:

einen Fluidkanal;

eine Vorrichtung (108), die betreibbar ist, um mindestens einen Druckimpuls in dem Fluidkanal zu induzieren;

einen oder mehrere Sensoren (110), die betreibbar sind, um ein Druckprofil basierend auf dem mindestens einen Druckimpuls zu messen; und

ein nichtflüchtiges computerlesbares Speichermedium nach irgendeinem der Ansprüche 9 bis 14.

**Revendications**

1. Procédé de détermination non intrusive de dépôts (106) dans un canal fluidique (102), le procédé comprenant :

l'obtention, à partir d'un ou de plusieurs capteurs (110), d'un profil de pression mesuré basé sur au moins une impulsion de pression induite dans un canal fluidique ;

la génération (502) d'un modèle direct de dépôts dans le canal fluidique ;

la génération (504), à l'aide du modèle direct, d'un profil de pression simulé ;

le calcul (506), à l'aide du profil de pression mesuré et du profil de pression simulé, d'une erreur ;

la mise à jour (509), lorsque l'erreur est en dehors d'un seuil prédéterminé, du modèle direct comportant des entrées mises à jour calculées à l'aide du dépôt mis à jour = le dépôt + $\alpha$ * sqrt(l'erreur), dans lequel $\alpha$ est un facteur ajustable, dont la valeur est testée empiriquement ;

la répétition, jusqu'à ce que l'erreur soit dans le seuil prédéterminé, des étapes de génération du modèle direct, de génération du profil de pression simulé, de calcul de l'erreur et de mise à jour du modèle direct ;

l'ajustement du modèle avancé mis à jour sur la base de l'erreur ;

la délivrance (510), lorsque l'erreur est dans le seuil prédéterminé, du modèle direct ;

la génération (512), à l'aide du modèle direct, d'une estimation des dépôts dans le canal fluidique ; et

la délivrance de l'estimation des dépôts dans le canal fluidique.

2. Procédé selon la revendication 1, dans lequel l'estimation des dépôts est fournie sur la base de la quantité de dépôts estimés dans le canal fluidique par rapport à la distance dans le canal fluidique à partir de l'un ou des plusieurs capteurs.

3. Procédé selon la revendication 1 ou la revendication 2, dans lequel $\alpha$ est tel qu'une première itération de $\alpha$ est le plus grand nombre qui n'est pas numériquement instable.

4. Procédé selon une quelconque revendication précédente, dans lequel $\alpha$ est ajusté dynamiquement en fonction de l'ampleur de l'erreur.

5. Procédé selon la revendication 4, dans lequel l'ajustement de $\alpha$ assure une vitesse de convergence plus lente lorsque le profil de pression simulé est proche du profil de pression mesuré.

6. Procédé selon la revendication 4, dans lequel l'ajustement de $\alpha$ a lieu lorsque l'erreur commence à croître avec le nombre de répétitions.

7. Procédé selon la revendication 1, dans lequel l'erreur = | le profil de pression mesuré - le profil de pression simulé $|^2$.

8. Procédé selon la revendication 1, dans lequel $\alpha$ a un signe qui est le même que le signe de la différence entre le profil de pression mesuré et le profil de pression simulé.

9. Support de stockage non transitoire lisible par ordinateur stockant des instructions exécutables par au moins un processeur (114) pour :

obtenir, à partir de l'un ou des plusieurs capteurs (110), un profil de pression mesuré basé sur au moins une impulsion de pression induite dans un canal fluidique ;

générer (502) un modèle direct des dépôts dans le canal fluidique ;

générer (504), à l'aide du modèle direct, un profil de pression simulé ;

calculer (506), à l'aide du profil de pression mesuré et du profil de pression simulé, une erreur ;

mettre à jour (509), lorsque l'erreur est en dehors d'un seuil prédéterminé, le modèle direct comportant la mise à jour des entrées calculées à l'aide du dépôt mis à jour = le dépôt + $\alpha$ * sqrt(l'erreur), dans lequel $\alpha$ est un facteur ajustable, dont la valeur est testée empiriquement ;

répéter, jusqu'à ce que l'erreur soit dans le seuil prédéterminé, la génération du modèle direct, la génération du profil de pression simulé, le calcul de l'erreur et la mise à jour du modèle direct ;

ajuster le modèle avancé mis à jour en fonction de l'erreur ;

délivrer (510), lorsque l'erreur est dans le seuil prédéterminé, le modèle direct ;

générer (512), à l'aide du modèle direct, une estimation des dépôts dans le canal fluidique ; et

délivrer l'estimation des dépôts dans le canal fluidique.

10. Support de stockage lisible par ordinateur non transitoire selon la revendication 9, dans lequel l'estimation des dépôts est fournie en fonction de la quantité de dépôts estimés dans le canal fluidique par rapport à la distance dans le canal fluidique à partir de l'un ou des plusieurs capteurs.

11. Support de stockage lisible par ordinateur non transitoire selon la revendication 9 ou la revendication 10, dans lequel $\alpha$ est tel qu'une première itération de $\alpha$ est le plus grand nombre qui n'est pas numériquement instable.

12. Support de stockage lisible par ordinateur non transitoire selon l'une quelconque des revendications 9 à 11, dans lequel $\alpha$ est ajusté dynamiquement en fonction de l'ampleur de l'erreur.

13. Support de stockage lisible par ordinateur non transitoire selon la revendication 12, dans lequel l'ajustement de $\alpha$ garantit une vitesse de convergence plus lente lorsque le profil de pression simulé est proche du profil de pression mesuré.

14. Support de stockage lisible par ordinateur non transitoire selon la revendication 9 ou la revendication 10, dans lequel $\alpha$ a un signe qui est le même que le signe de la différence entre le profil de pression mesuré et le profil de pression simulé.

15. Système de détermination non intrusive de dépôts (106) dans un canal fluidique (102), le système comprenant :

un canal fluidique ;

un dispositif (108) pouvant fonctionner pour induire au moins une impulsion de pression dans le canal fluidique ;

un ou plusieurs capteurs (110) pouvant être utilisés pour mesurer un profil de pression sur la base de l'au moins une impulsion de pression ; et

un support de stockage lisible par ordinateur non transitoire selon l'une quelconque des revendications 9 à 14.

FIG. 1

200

202 — Induce a Pressure Pulse in a Fluidic Channel

204 — Record Pressure Fluctuations

206 — Obtain a Measured Pressure Profile

210 — Baseline Simulation

208 — Model Deposits in the Fluidic Channel

212 — Generate a Model of Deposits

**FIG. 2**

FIG. 3

FIG. 4

208, 500

502 — Generate a Forward Model of a Fluidic Channel

504 — Generate a Simulated Pressure Profile

506 — Calculate an Error

508 — Is the Error within a Predetermined Threshold ?

No → 509 Update the forward Model

Yes

510 — Output the Forward Model

512 — Generate a Model of Deposits in the Fluidic Channel

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017008098 A1
- US 20120041694 A1
- US 20150378052 A1
- US 20030185100 A1
- US 20170350936 A1

**Non-patent literature cited in the description**

- **DUAN et al.** *Experimental Investigation of Wave Scattering Effect of Pipe Blockages on Transient Analysis*